# EUROPEAN PATENT APPLICATION

(11) **EP 4 745 037 A1**
(43) Date of publication of application: **20.05.2026**
(21) Application number: 24275129.5
(22) Date of filing: 15.11.2024
(51) Int. Cl.: B64D 15/20, G06N 10/00

(54) **AIRCRAFT ENVIRONMENTAL-CONDITION DETECTION**

(71) Applicant: Goodrich Corporation, Charlotte, NC 28217 (US)
(72) Inventor: CHABUKSWAR, Rohan, Cork (IE)
(74) Representative: Dehns

(57) **Abstract**

A system for detecting an environmental condition at or adjacent a measurement location on an aircraft comprises a quantum sensor system configured to sense one or more physical parameters at the measurement location and to encode the sensed one or more physical parameters as one or more quantum states for quantum teleportation. It further comprises a processing system configured to receive the one or more quantum states from the quantum sensor system using quantum teleportation, and process the one or more quantum states to detect the environmental condition at or adjacent the measurement location.

## Description

### TECHNICAL FIELD

The present disclosure relates generally to systems and methods for detecting an environmental condition at or adjacent a measurement location on an aircraft.

### BACKGROUND

There are many situations where it is useful or important to detect an environmental condition on an aircraft. For example, it can be useful to detect an icing or freezing condition so that action can be taken to avoid or mitigate the effects of such conditions. Icing on aircraft can be a hazardous safety concern. For example, governmental agencies, such as the Federal Aviation Administration ("FAA") in the United States of America, and the European Aviation Safety Agency ("EASA") in Europe, often establish rules and safety requirements that relate to icing on aircraft, and aircraft are often fitted with sensors to detect icing.

In the aircraft industry, standards exist for aircraft in relation to them being permitted to operate in different icing or freezing conditions. Aircraft may need to be certified to operate in conditions that are classified by the FAA as "Appendix C icing conditions" (see FAA CFR 14 Part 25). More recently, concerns have been raised about different icing conditions-e.g. so-called 'Supercooled Large Droplets' or SLDs which have, over the last three decades, caused a number of accidents and safety events. Aircraft that are certified to operate in Appendix C conditions may still not be sufficiently robust against SLD conditions. The FAA has issued heightened rules, at least for certain types of aircraft, pertaining to conditions in which specific water content and altitudes in the atmosphere result in the formation of SLDs. These conditions, which are not covered by Appendix C icing conditions, are referred to as 'Appendix O' icing conditions. Similarly, 'Appendix P' conditions, which arise in deep convective clouds and result in mixed phase and ice crystal icing conditions, have been identified as requiring additional consideration. Only aircraft that are certified for Appendix O and Appendix P conditions may operate in such conditions respectively. For aircraft, there may be, therefore, a need to be able to distinguish between i) non-icing, or not freezing conditions, ii) Appendix C conditions iii) Appendix O conditions or iv) Appendix P conditions, since the aircraft may need to remove itself from conditions that may arise but for which the aircraft is not certified.

Traditionally, icing condition detection has been performed by optical detection using a reverse polarized laser, magneto-restrictive detection-e.g. by monitoring the frequency change on magnetic probes, temperature detection based on water content estimation or by monitoring electric field variation in capacitive elements. Sensing using dual-layer heating and temperature measurements can be used for such detection and the sensor parameters-e.g. sampling frequency, temperature, etc. can be controlled to provide faster or more reliable detection based on the confidence levels of the detection as well as, for example, how close the conditions are to the boundary between Appendix C and Appendix O conditions, or the boundary between Appendix O and Appendix P icing conditions. However, effectively differentiating between these different environmental conditions requires high volumes of high accuracy sensor data to be processed, at high speed in real time. Traditional icing detection systems and methods may fall short of these requirements.

### SUMMARY

The disclosure provides a system for detecting an environmental condition at or adjacent a measurement location on an aircraft, the system comprising:
a quantum sensor system configured to sense one or more physical parameters at the measurement location and to encode the sensed one or more physical parameters as one or more quantum states for quantum teleportation; and
a processing system configured to:
   receive the one or more quantum states from the quantum sensor system using quantum teleportation; and
   process the one or more quantum states to detect the environmental condition at or adjacent the measurement location.

The disclosure further provides a method for detecting an environmental condition at or adjacent a measurement location on an aircraft, the method comprising:
sensing one or more physical parameters at the measurement location using a quantum sensor system;
encoding the sensed one or more physical parameters as one or more quantum states for quantum teleportation;
quantum teleporting the one or more quantum states from the quantum sensor system to a processing system; and
processing the one or more quantum states in the processing system to detect the environmental condition at or adjacent the measurement location.

In accordance with at least some examples of the disclosure, by encoding the one or more physical parameters at the measurement location as one or more quantum states for quantum teleportation, parameters sensed by the sensor may be compactly encoded and efficiently communicated to the processing system. This may allow examples of the system to detect the environmental condition more efficiently and/or more accurately than if using classical (i.e. non-quantum) sensing and communication techniques.

Quantum teleportation may further allow the processing system, in some examples, to be located remotely from the quantum sensor system, which might otherwise be impracticable due to the capacity limitations of classical (i.e. non-quantum) radio data links between aircraft and remote processing systems.

The system may be configured to sense an environmental condition at or adjacent any location (i.e. site) on the aircraft, e.g. on a surface of the airframe or at a location in an engine of the aircraft. The environmental condition may be a temperature-related condition, or a humidity-related condition. The environmental condition be an over-heat condition of an engine of the aircraft. However, in some examples, the environmental condition is an icing condition, and detecting the environmental condition comprises detecting the icing condition (i.e. determining whether the icing condition is present) at or adjacent the measurement location on the aircraft. Detecting the environmental condition may comprise determining whether airframe icing (optionally of a particular type) is likely to occur at the measurement location. In some examples, the measurement location is on a leading edge of a wing of the aircraft. The measurement location may alternatively be on a leading edge of a tail plane (e.g. a vertical fin) of the aircraft, or on any other external airframe surface. The environmental condition may exist at the measurement location and/or adjacent the measurement location (e.g. in a body of air in contact with the wing or tail plane of the aircraft).

The processing system may be further configured to process one or more quantum states received from the quantum sensor system to detect a non-icing condition at or adjacent the measurement location. The system may be configured to detect when airframe icing is likely to occur and to detect when airframe icing is not likely to occur. The processing system may be configured to determine a type of the environmental condition-e.g. to classify the environment condition. In particular, it may be configured to detect (i.e. identify) an icing condition of a first type, and, independently, to detect (i.e. identify) an icing condition of a second type, different from the first type. The processing system may be further configured to detect an icing condition of a third type, different from each of the first type and second type. For example, the first type of icing condition may comprise environmental envelopes defined by Appendix C icing conditions and the second type of icing condition may comprise environmental envelopes defined by Appendix O icing conditions. The third type of icing condition may comprise environmental envelopes defined by Appendix P icing conditions. Appendix C icing conditions may comprise environmental conditions where airframe icing may be caused by stratiform clouds and/or environmental conditions where airframe icing may be caused by cumuliform clouds. Appendix O icing conditions may comprise environmental conditions associated with a risk of supercooled large droplets being present. Appendix P icing conditions may comprise environmental conditions associated with mixed phase and ice crystal airframe icing caused by deep convective clouds.

The one or more physical parameters may comprise one or more of: temperature, humidity, a droplet median volume diameter of environmental water droplets, a droplet mean effective diameter of environmental water droplets, and the liquid water content per unit volume.

The quantum sensor system may comprise a plurality of quantum sensors, each quantum sensor being configured to sense and encode one or more physical parameters as one or more quantum states. Each quantum sensor of the plurality of quantum sensors may be arranged at a different respective location-e.g. arranged in a one-dimensional or two-dimensional pattern (e.g. a regularly-spaced array) along a leading edge of an aircraft wing. Each quantum sensor of the plurality of quantum sensors may be configured to sense and encode a same physical parameter-e.g. ambient temperature. Alternatively, different quantum sensors of the plurality of quantum sensors may be configured to encode different respective physical parameters. In some examples, each quantum sensor of the plurality of quantum sensors is configured to encode, as one or more quantum states, a respective plurality of different physical parameters for a respective measurement location. For example, the one or more quantum states may encode both temperature and liquid water content per unit volume, or any other combination of different physical parameters.

The quantum sensor system, or each quantum sensor, may sense one or more physical parameters using electron spin, atomic spin, or any other relevant quantum state. The quantum sensor system, or each quantum sensor, may encode the one or more physical parameters sensed by the quantum sensor system, or each quantum sensor, as a polarisation state of a photon for quantum teleportation. The polarisation state may be a linear, circular or elliptical state. A phase or a direction of the polarisation may be proportional to a magnitude of a sensed physical parameter of the one or more physical parameters. The encoding of the sensed parameter(s) may be performed without collapsing any quantum state.

The processing system may be configured to receive one or more quantum states from each of a plurality of quantum sensors. The processing system may be configured to detect the environmental condition by processing the quantum states received from the plurality of quantum sensors.

The quantum sensor system and the processing system may each store a respective photon of an entangled photon pair. They may do so for a plurality of entangled photon pairs (e.g. with one or more pairs for each quantum sensor). The quantum sensor system may be configured to encode one or more sensed physical parameters by the respective photon of the entangled photon pair for quantum teleportation (e.g. as a polarisation state).

The processing system may be configured to receive secondary input data from one or more other sensors on the aircraft and may be configured to use the secondary input data alongside the one or more quantum states received from the quantum sensor system to detect the environmental condition. The one or more other sensors may comprise one or more quantum sensors at a separate measurement location, or one or more classical sensors, or both quantum and classical sensors. The one or more other sensors on the aircraft may comprise: an angle-of-attack sensor for sensing an angle of attack; a side-slip angle sensor for sensing a side-slip angle; a temperature sensor for sensing a temperature external to the aircraft; an altimeter for sensing an altitude of the aircraft; a velocity sensor for sensing a velocity of the aircraft; or any combination of such sensors. The secondary input data may comprise: an angle of attack; a side-slip angle; a temperature external to the aircraft; an altitude of the aircraft; a velocity of the aircraft; or any combination thereof. The processing system may be further configured to receive further input data from the flight deck of the aircraft, and to use said further input data alongside the one or more quantum states received from the quantum sensor system to detect the environmental condition. The further input data may comprise environmental data such as forecast meteorological conditions, or any of the above-mentioned secondary input data.

The processing system may be configured to process the information encoded by the one or more quantum states using a classical processor (e.g. after observing the one or more quantum states and decoding binary data therefrom), or may be configured to process the one or more quantum states using a quantum computer. It may be configured to receive the one or more quantum states into the quantum computer for processing without collapsing the one or more quantum states. Thus, in some examples, the processing system comprises a quantum computer configured to process the one or more quantum states to detect the environmental condition. The quantum computer may be configured to process the one or more quantum states in a quantum variational classifier to detect the environmental condition. The quantum variation classifier may have been trained using a quantum supervised learning algorithm. The quantum computer may be configured to implement quantum feature mapping and/or one or more quantum kernel methods.

In examples where the processing system is configured to use a classical processor, the processing system may comprise:
a quantum decoder configured to decode the one or more quantum states into classical data (e.g. binary data) representative of the one or more physical parameters; and
a classical processor configured to use a trained software model to process the classical data representative of the one or more physical parameters to detect the environmental condition.

The trained software model may comprise a statistical model. The statistical model may be trained using test data in which a set of input data from n data inputs are each plotted as a point in n-dimensional space, wherein the n-dimensional space is divided into a plurality of regions each representative of a different environmental icing condition. The classical processor may be configured to process the classical data representative of the one or more physical parameters by providing the classical data as input data as part of a set of input data to the statistical model; determining a region of the statistical model in which the input data is located; and detecting the environmental condition indicated by the input data according to the determined region.

Where provided as part of the processing system, a quantum computer may be used for all or part of the processing carried out by the processing system. The processing system may be configured to use a combination of quantum algorithms implemented on a quantum computer and classical algorithms implemented on a classical processor to detect the environmental condition. In these examples, the processing system may be configured to use a quantum decoder to decode an output of a quantum algorithm from the quantum computer into classical data, and to provide the output to a classical algorithm implemented on a classical processor. The classical processor may then process the output of the quantum algorithm to detect the environmental condition.

The processing system may be located on the aircraft or remotely from the aircraft. In examples where the processing system comprises a quantum computer, the quantum computer may be located on the aircraft, or it may be located remote from the aircraft - e.g. at a ground station. The use of quantum teleportation may advantageously allow the one or more quantum states encoding the one or more physical parameters to be teleported to the quantum computer across large distances. A radio link may be used to communicate classical information associated with the one or more quantum states, which may be used by the processing system for decoding and/or processing the one or more quantum states.

An indication of the detected environmental condition may be provided to a user of the aircraft (e.g. a pilot). Alternatively or additionally, the detected environmental condition may be used as input to a control system for the aircraft. The control system may be configured to take a control action is response to the detected environmental condition. For example, a control system may be configured to provide a warning to the pilot of the aircraft in response to detecting an icing condition at or adjacent the measurement location on the aircraft. A control system may be additionally or alternatively configured to activate an anti-icing system or de-icing system of the aircraft.

Features of any aspect or example described herein may, wherever appropriate, be applied to any other aspect or example described herein. Where reference is made to different examples or sets of examples, it should be understood that these are not necessarily distinct but may overlap.

### BRIEF DESCRIPTION OF THE DRAWINGS

Certain examples of the disclosure will now be described, by way of example only, with reference to the accompanying drawings, in which:
Figure 1 is a schematic diagram of a first example of a system for detecting environmental conditions on an aircraft;
Figure 2 is a schematic diagram of a quantum sensor system at the leading edge of an aircraft wing;
Figure 3 is a schematic diagram of a second system for detecting environmental conditions on an aircraft; and
Figure 4 is a schematic diagram of a third system for detecting environmental conditions on an aircraft.

### DETAILED DESCRIPTION

According to the present disclosure, environmental conditions, e.g. an icing condition, may be detected, and optionally classified, by a processing system which receives quantum states encoding one or more physical parameters from a quantum sensor system. Using a quantum sensor system to encode one or more physical parameters may allow a physical parameter such as ambient temperature to be sensed and encoded more accurately (i.e. to a finer resolution) compared to classical sensing systems.

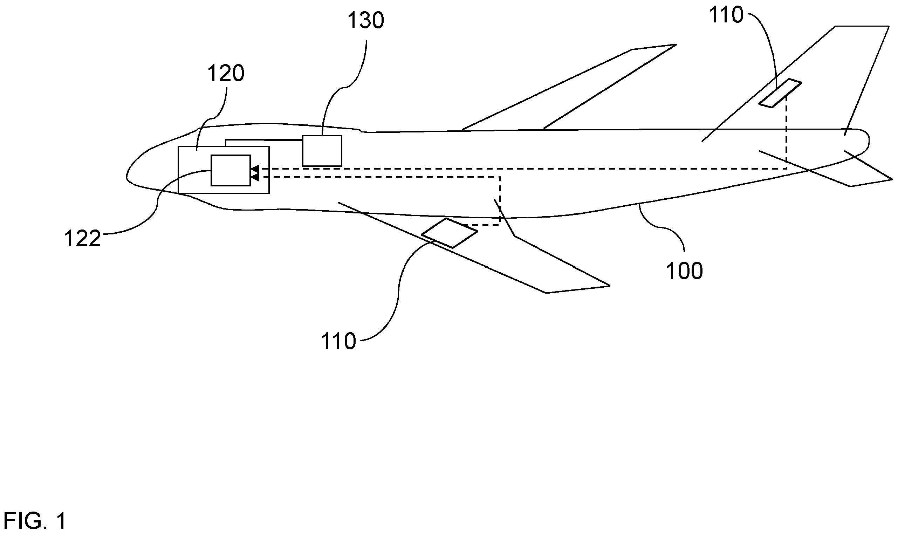

Figure 1 shows a first example of a system for detecting an environmental condition on or adjacent an aircraft. An aircraft 100 has a first quantum sensor system 110 mounted at the leading edge of a wing of the aircraft 100, and a second quantum sensor system 110 mounted at the leading edge of the vertical fin of the tailplane of the aircraft 100. Although not shown in Figure 1, a further, similar quantum sensor system can also be provided on the other wing, and/or at multiple other locations along the length of the wing. A processing system 120 is also provided on the aircraft 100. In the system shown in Figure 1, the processing system 120 on the aircraft 100 comprises a quantum computer 122. The processing system 120 may further comprise any number of classical processors - i.e. processors designed to operate on classical (e.g. binary) data. The aircraft 100 further comprises a control system 130 connected to the processing system 120. The combination of the quantum sensor system 110 and the processing system 120 provide a system for detecting an environmental condition (in this example an icing condition) as disclosed herein.

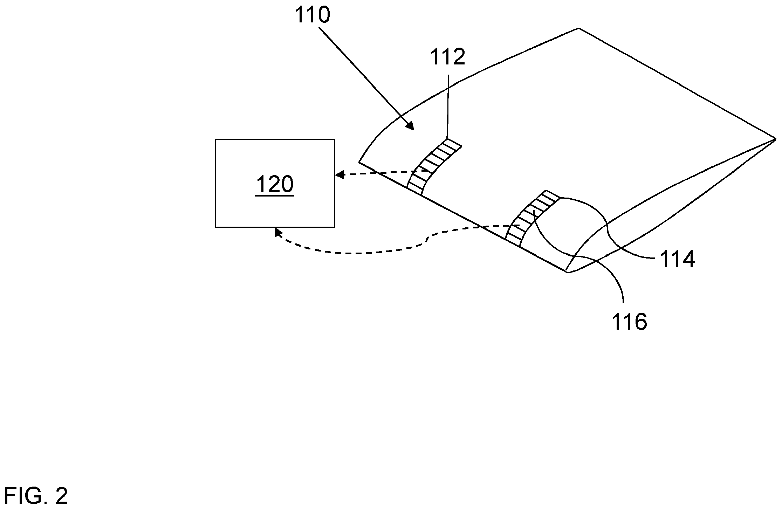

Figure 2 shows an example of a sensing system (e.g. the first quantum sensor system 110 shown in Figure 1) at the leading edge of an aircraft wing. The quantum sensor system 110 comprises a first sensor array 112 and a second sensor array 114. Each sensor array 112, 114 comprises a plurality of discrete quantum sensors 116. Although the size of these quantum sensors 116 is in practice much smaller than those shown in Figure 2, they are enlarged in Figure 2 for clarity of illustration. Each sensor array 112, 114 may comprise ten to one thousand individual quantum sensors 116.

Physical parameters such as temperature can vary considerably along the leading edge of a wing. Therefore, it is important to acquire information about environmental conditions at multiple positions along the profile of the wing at the leading edge in order to accurately detect whether an icing condition is present. The same considerations apply to the leading edge of the vertical fin of the tail plane. A greater number of sensors allows a more accurate classification of icing conditions to be detected, especially when distinguishing between Appendix C, Appendix O and Appendix P icing conditions. The density of classical temperature sensors which can be placed on the leading edge of the wing or tail fin is limited by the physical size of each sensor. The use of quantum sensors may enable many sensors to be included in each sensing array 112, 114. Having a large number of discrete sensors generates a large volume of data, which may be impracticable to transfer and/or process if using classical methods. However, quantum sensing enables more efficient storage and transfer of data relating to the physical parameters detected by each sensor, as will be explained in more detail below.

Each quantum sensor 116 can sense one or more physical parameters (e.g. temperature alone, or temperature and liquid water content per unit volume) and encode the sensed parameters using one or more quantum states, e.g. using electron spin, atomic spin or any other relevant quantum state. Each quantum sensor may then use a photon of an entangled photon pair to encode the sensed physical parameters as a polarisation state of a photon for quantum teleportation.

The quantum sensor may be implemented according to any current or future method-for example, using a single photon interferometer (e.g. as described in Yun Peng, Sen Qin, Siqi Zhang, Yong Zhao, "Optical fiber quantum temperature sensing based on single photon interferometer", Optics and Lasers in Engineering, Volume 167, 2023, 107611, 10.1016/j.optlaseng.2023.107611*.),* or using a quantum dots-based fibre-optic temperature sensor (e.g. as described in W. Wang et al., "Quantum Dots-Based Multiplexed Fiber-Optic Temperature Sensors"; in IEEE Sensors Journal, vol. 16, no. 8, pp. 2437-2441, April15, 2016, doi: 10.1109/JSEN.2016.2516099*),* or using superradiant phase-transition (e.g. as described in A. Y. Bazhenov, D.V. Tsarev, A.P. Alodjants, "Temperature quantum sensor on superradiant phase-transition", Physica B: Condensed Matter, Volume 579, 2020, 10.1016/j.physb.2019.411879).

The quantum states generated by each quantum sensor 116 are transmitted to the processing system 120 using quantum teleportation. Using quantum teleportation allows all of the information encoded by the quantum sensor 116 to be preserved during communication with the processing system 120, without the wavefunction collapsing. A qubit of information can be transferred from one location to another using two other entangled qubits - the first located in the quantum sensor 116 and the second located in the processing system 120 where the information encoded by the qubit will be processed. The information encoded by the quantum sensor may be transferred according to any current or future method (e.g. as described in Hu, XM., Guo, Y., Liu, BH. et al. "Progress in quantum teleportation". Nat Rev Phys 5, 339-353 (2023). https://doi.org/10.1038/s42254-023-00588-x*,* or in C. Ryan-Anderson et al., "High-fidelity teleportation of a logical qubit using transversal gates and lattice surgery". Science 385, 1327-1331(2024). DOI:10.1126/science.adp6016). The quantum sensor system 110 can thus encode and communicate sensed data very efficiently, since a 2*ⁿ*-dimensional vector of sensed physical parameter data can be encoded using only *n* qubits.

In the system shown in Figure 1, the quantum states from each quantum sensor 116 are teleported directly into the quantum computer 122 on the aircraft 100. The quantum states are processed by the quantum computer 122 using a trained quantum machine learning algorithm to detect whether an icing condition is present. Keeping the information in a quantum state, instead of collapsing the wavefunction after teleportation, allows all the sensed information regarding the environmental conditions at the location of the quantum sensor to be preserved during processing. Quantum computing algorithms can then be employed to detect and classify any icing condition that may be present. The quantum machine learning algorithm may classify the environmental condition at or adjacent the quantum sensor system 110 (or a respective environmental condition adjacent each sensor location) as: a non-icing condition; an Appendix C icing condition; an Appendix O icing condition; or an Appendix P icing condition. Once the environmental condition has been detected by the quantum computer 122, the output can be collapsed into classical data.

Quantum machine learning algorithms may have a faster training speed and/or inference speed than classical machine learning algorithms. This may reduce the data required for training and/or subsequently using the models implemented by the processing system 120. Examples of quantum algorithms that may be implemented by the processing system 120 include a quantum variational classifier, which may have been trained using a quantum supervised learning algorithm. The quantum computer 122 may be configured to implement quantum feature mapping and/or one or more quantum kernel methods. It may implement any current or future quantum machine learning method (e.g. as described in Peral-Garcia, David, Juan Cruz-Benito, and Francisco José García-Peñalvo. "Systematic literature review: Quantum machine learning and its applications" Computer Science Review 51 (2024): 100619*).*

The quantum sensor system 110 may communicate data to the processing system 120 at regular intervals, and the processing system 120 may make periodic determinations as to whether a particular icing condition is present or not at or adjacent the location of the system 110.

After each determination, the processing system 120 may output a signal to the control system 130. The control system 130 implements control actions in dependence on the detected condition (e.g. a non-icing condition, or an Appendix C icing condition, an Appendix O icing condition, or an Appendix P icing condition). For example, the control system 130 may issue a warning to the pilot of the aircraft 100 in response to determining that an icing condition is present. The pilot could then navigate away from the region where icing conditions are present, receiving feedback in real time from the processing 120 as to whether icing conditions are still present on the wing. The control system 130 may also activate an anti-icing or de-icing system on the aircraft to prevent the build up of ice on the leading edge of the wings or other surfaces of the aircraft. If the type of icing condition detected by the processing system 120 is one which the aircraft 100 is approved for flying in, the pilot may continue to travel through the region where icing conditions are present whilst an anti-icing or de-icing system is activated.

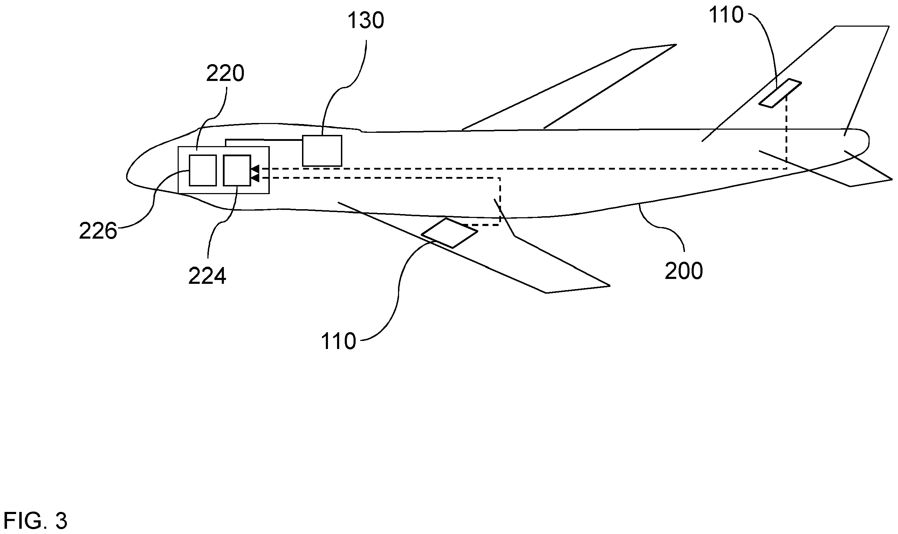

The example described above with reference to Figure 1 uses a quantum computer 122 to process the quantum states received from the quantum sensors 116. However, alternative arrangements for processing the received quantum states are envisaged. Figure 3 shows a second example of a system for detecting environmental conditions on an aircraft. Like the first system shown in Figure 1, the aircraft 200 shown in Figure 3 has a quantum sensor system 110 mounted at the leading edge of a wing of the aircraft 200, and a control system 130 connected to the processing system 120. However, unlike the first system shown in Figure 1, the processing system 220 comprises a quantum decoder 224 and a classical processor 226 instead of a quantum computer 122. In this second example, the quantum states are teleported to the quantum decoder 224, which is configured to collapse the quantum states into classical measurements. For example, the information conveyed by the entangled proton can be measured, and the physical parameters (e.g. temperature and pressure) at the location of the quantum sensors 116 are detected from the measurement. The classical processor 226 is configured to classify the measured physical parameters into one of the classes mentioned above (e.g. non-icing conditions; Appendix C icing conditions; Appendix O icing conditions; and Appendix P icing conditions) using a classical machine learning algorithm.

If using a classical algorithm to process the data, the processing system may use hierarchical classification using statistical models. For example, the first level is a classifier between dry (non-freezing) and freezing conditions. If a freezing condition is identified, a second level is a classifier between different icing conditions e.g. between Appendix C, Appendix O conditions and Appendix P conditions. This is just one example, and the second level could distinguish between other icing conditions. Further levels could conceivably also be added to further classify conditions. The classifiers can be linear or quadratic, and use parameters that are pre-programmed using test data e.g. data from simulation, wind tunnel tests, flight tests or the like.

It is envisaged that, in some examples, the processing system 120 may use combination of quantum algorithms implemented on the quantum computer 122 and classical algorithms implemented on a classical processor 126 to detect the environmental condition. In these examples, the processing system 120 may decode an intermediate output of a quantum algorithm from the quantum computer 122 into classical data, and provide the output to a classical algorithm implemented on a classical processor 126. The classical processor 126 may then process the output of the quantum algorithm to detect the environmental condition. Using a combination of quantum processing and classical processing would allow the system for detecting an environmental condition to use information from multiple different types of sensors. These different sensors could provide information about various factors which might influence whether icing conditions are present. For example, the processing system 120 could receive input from an angle-of-attack sensor which senses the angle-of-attack of the wing that the quantum sensors 166 are mounted on. The processing system 120 could also receive input from an altimeter for sensing the altitude of the aircraft. The processing system 120 could use this input data alongside the quantum states received from the quantum sensors 116 to detect whether an icing condition is present.

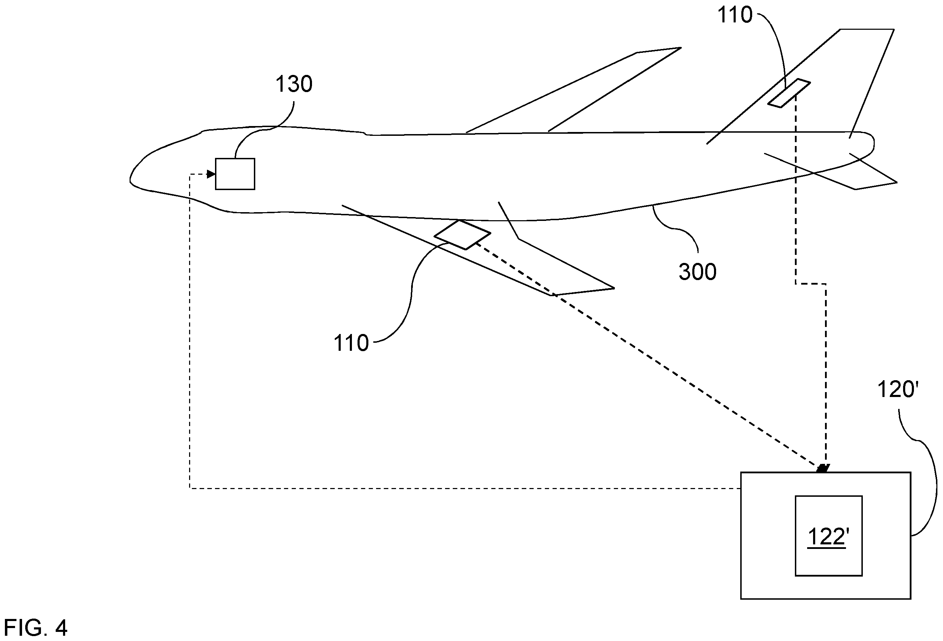

Figure 4 shows a third example of a system for detecting environmental conditions on an aircraft. In a similar manner to the first system shown in Figure 1, the aircraft 300 shown in Figure 2 has a quantum sensor system 110 mounted at the leading edge of a wing of the aircraft 100, and a control system 130. However, unlike the first system, the processing system 120' comprising a quantum computer 122' is provided at a station on the ground (or alternatively on a satellite or on a further aircraft) rather than on the aircraft 300. Using quantum teleportation for communication between the quantum sensor system 110 and the processing system 120' allows the quantum computer 122' to be located at large distances from the quantum sensors 116. Removing the quantum computer 122' from the aircraft 300 may reduce the power consumption which would need to be provided by the in-flight aircraft 300. Associated classical information, required for decoding and/or processing the quantum states, may be communicated by radio (e.g. via a satellite link). Once the quantum states have been processed by the processing system 120' to detect whether or not any icing condition is present, and potentially detect whether a particular type of icing condition is present, the processing system 120' transmits this information to the control system 130 on the aircraft. The information may be transmitted using typical methods for communicating between stations at ground level (e.g. air traffic control), and in-flight aircraft (e.g. over a direct radio link or via a satellite link). The control system 130 may operate in a similar manner to the control system described above with reference to Figure 1.

The disclosure has been illustrated by describing one or more specific examples thereof, but is not limited to these examples; many variations and modifications are possible.

## Claims

1. A system for detecting an environmental condition at or adjacent a measurement location on an aircraft, the system comprising:
a quantum sensor system configured to sense one or more physical parameters at the measurement location and to encode the sensed one or more physical parameters as one or more quantum states for quantum teleportation; and
a processing system configured to:
receive the one or more quantum states from the quantum sensor system using quantum teleportation; and
process the one or more quantum states to detect the environmental condition at or adjacent the measurement location.

2. The system of claim 1, wherein the environmental condition is an icing condition, and detecting the environmental condition comprises detecting the icing condition at or adjacent the measurement location on the aircraft.

3. The system of claim 2, wherein the processing system is configured to detect an icing condition of a first type, and, independently, to detect an icing condition of a second type, different from the first type.

4. The system of claim 2 or 3, wherein the processing system is further configured to process one or more quantum states received from the quantum sensor system to detect a non-icing condition at or adjacent the measurement location.

5. The system of any preceding claim, wherein the measurement location is on a leading edge of a wing or fin of the aircraft.

6. The system of any preceding claim, wherein the one or more physical parameters comprises: a temperature, or a humidity, or a droplet median volume diameter of environmental water droplets, or a droplet mean effective diameter of environmental water droplets, or a liquid water content per unit volume.

7. The system of any preceding claim, wherein the quantum sensor system and the processing system each store a respective photon of an entangled photon pair.

8. The system of any preceding claim, wherein the quantum sensor system comprises a plurality of quantum sensors, each quantum sensor being configured to sense and encode one or more physical parameters as one or more quantum states, and the processing system is configured to:
receive one or more quantum states from each of a plurality of quantum sensors; and
detect the environmental condition by processing the quantum states received from the plurality of quantum sensors.

9. The system of any preceding claim, wherein the processing system comprises a quantum computer configured to process the one or more quantum states to detect the environmental condition.

10. The system of claim 9, wherein the quantum computer is located remotely from the aircraft.

11. The system of any of claims 1 to 8, wherein the processing system comprises:
a quantum decoder configured to decode the one or more quantum states into classical data representative of the one or more physical parameters; and
a classical processor configured to use a trained software model to process the classical data representative of the one or more physical parameters to detect the environmental condition.

12. The system of any preceding clam, wherein the processing system is configured to:
receive secondary input data from one or more other sensors on the aircraft; and
use the secondary input data alongside the one or more quantum states received from the quantum sensor system to detect the environmental condition.

13. The system of claim 12, wherein the secondary input data comprises: an angle of attack, or a side-slip angle, or a temperature external to the aircraft, or an altitude of the aircraft, or a velocity of the aircraft.

14. The system of any preceding claim, wherein the processing system is further configured to output the detected environmental condition to a control system for the aircraft.

15. A method for detecting an environmental condition at or adjacent a measurement location on an aircraft, the method comprising:
sensing one or more physical parameters at the measurement location using a quantum sensor system;
encoding the sensed one or more physical parameters as one or more quantum states for quantum teleportation;
quantum teleporting the one or more quantum sates from the quantum sensor system to a processing system; and
processing the one or more quantum states in the processing system to detect the environmental condition at or adjacent the measurement location.
